# EUROPÄISCHE PATENTSCHRIFT

(11) **EP 0 533 260 B1**
(45) Veröffentlichungstag und Bekanntmachung des Hinweises auf die Patenterteilung: **10.03.1999**
(21) Anmeldenummer: 92202783.4
(22) Anmeldetag: 11.09.1992
(51) Int. Cl.: G10L 5/06

(54) **Verfahren und Anordnung zum Erkennen der gesprochenen Wörter in einem Sprachsignal**
Method and apparatus for recognizing the uttered words in a speech signal
Procédé et dispositif pour la reconnaissance des mots prononcés dans un signal de parole

(30) Priorität: 14.09.1991 DE 4130631
(43) Veröffentlichungstag der Anmeldung: 24.03.1993
(73) Patentinhaber: Philips Patentverwaltung GmbH, 22335 Hamburg (DE); Koninklijke Philips Electronics N.V., 5621 BA Eindhoven (NL)
(72) Erfinder: Häb-Umbach, Reinhold, Dr., c/o Philips Pat. GMBH, W-2000 Hamburg 1 (DE); Ney, Hermann, Dr., c/o Philips Patentv.GmbH, W-2000 Hamburg 1 (DE)
(74) Vertreter: Volmer, Georg, Dipl.-Ing.

(56) Entgegenhaltungen:
- EP-A- 0 285 211
- EP-A- 0 285 222
- ICASSP-87 Bd. 2 , 1987 Seiten 833 - 836 H.NEY ET AL. 'A data-driven organization of the dynamic programming beam search for continuous speech recognition'
- AEU ARCHIV FÜR ELEKTROTECHNIK UND ÜBERTRAGUNGSTECHNIK Bd. 43, Nr. 5, September 1989, STUTTGART, Seiten 292 - 298 H.HOGE 'SPICOS II - Ein sprachverstehendes Dialogsystem'

## Beschreibung

Die Erfindung betrifft ein Verfahren zum Erkennen einer Folge von Wörtern in einem Sprachsignal mit folgenden Schritten:
- Zu wiederholten Zeitpunkten wird das Sprachsignal abgetastet, um eine Folge von Testsignalen zu erzeugen;
- es wird ein signalweiser Vergleich mit Bewertung zwischen den Testsignalen und verschiedenen Folgen von Referenzsignalen durchgeführt, die zu einem Satz von Folgen von Referenzsignalen gehören, wobei jede Folge von Referenzsignalen ein Wort des Vokabulars darstellt, und für jedes beendete Wort wird ein Wortergebnis abgeleitet, das einen Wort-Bewertungswert, einen Gesamt-Bewertungswert, der von dem Wort-Bewertungswert und von einem Sprachmodellwert abgeleitet ist, der einer Kombination des beendeten Wortes und einer Folge von beendeten Vorgängerwörtern mit einheitlicher Länge zugeordnet ist, und außerdem einen Hinweis auf das letzte Wort dieser Folge umfaßt;
- der Vergleich mit Bewertung wird für nachfolgende Testsignale weitergeführt, und das Sprachsignal wird auf der Basis der Auswahl des minimalen Wertes der Gesamt-Bewertungswerte erkannt.

Ein derartiges Verfahren ist beispielsweise bekannt aus der DE-PS 32 15 868. Dies ist ein einstufiges Verfahren mit nichtlinearer Zeitanpassung mittels dynamischer Programmierung innerhalb der Wörter und einer Ermittlung optimaler Wortübergänge. Jedesmal dann, wenn ein Wortende erreicht wird, wird die Suche in dem gesamten Vokabular fortgesetzt. Dies führt bei einem größeren Vokabular von beispielsweise über 10.000 Wörtern zu einem sehr großen Suchraum, der viel Rechenzeit erfordert, so daß die Erkennung langsam abläuft.

Ein verbessertes Verfahren ist aus der DE-OS 37 10 507 bekannt. Dabei wird durch regelmäßige Vergleiche aller Hypothesen mit einem Schwellwert der Suchraum immer wieder eingeschränkt. Durch Verwendung eines Sprachmodells, bei dem syntaktische Zusammenhänge, beispielsweise in Form von statistischen Wahrscheinlichkeiten berücksichtigt werden, kann eine Erhöhung der Erkennungssicherheit erreicht werden. Dabei wird am Ende jeweils eines Wortes zu den erneut in die Vergleiche aufgenommenen Wörter ein Sprachmodellwert addiert, der von der Kombination des jeweils neu begonnen Wortes und des Vorgängerworts bei einem Bigram-Sprachmodell oder der Vorgängerwörter bei einem n-Gram-Sprachmodell abhängt. Trotzdem ergibt sich bei einem großen Vokabular im Mittel ein großer Suchraum, der nahezu direkt von dem Umfang des Vokabulars abhängt und damit viel Rechenzeit erfordert.

Aufgabe der Erfindung ist es, ein Verfahren der eingangs genannten Art anzugeben, das ohne wesentliche Einbuße an Erkennungssicherheit schneller arbeitet.

Diese Aufgabe wird erfindungsgemäß dadurch gelöst, daß das Vokabular als Baum mit einer Wurzel aufgebaut ist, worin jeder Baumzweig eine Anzahl von Referenzsignalen aufweist und einem Sprachelement zugeordnet ist und Vokabularwörter jeweils einem bestimmten Zweigknoten oder Zweigende zugeordnet sind, und daß für jedes einer Anzahl Wörter, die gleichzeitig enden, getrennt Bewertungsergebnisse von der genannten Fortsetzung des Vergleichs mit Bewertung nach dem Start bei der Wurzel, zusammen mit einem Hinweis auf das zugeordnete beendete Wort, gespeichert wird, während von identischen Wörtern bei der genannten Mehrzahl nur dasjenige mit dem niedrigsten Gesamt-Bewertungswert behalten wird.

Grundlage der Erfindung ist es, das sprachliche Vokabular als Baumstruktur zu organisieren. Das Vokabular, das auch auch als Aussprachelexikon bezeichnet werden kann, gibt die Aussprache für jedes Wort als Folge von Sprachlauten oder Wortuntereinheiten, z.B. Phonemen, an. Insbesondere in europäischen Sprachen läßt sich das Aussprachelexikon mit einer nur sehr beschränkten Anzahl von Phonemen darstellen, beispielsweise bei der deutschen Sprache mit etwa 50 Phonemen. Weil viele Wörter mit der gleichen Phonemfolge beginnen, ist eine Abspeicherung des Aussprachelexikons in Baumform kompakter als eine einfache Tabelle, die für jedes Wort eine phonetische Transkription enthält und die als lineares Lexikon betrachtet werden kann. Bei der Baumstruktur entspricht jeder Baumzweig beispielsweise einem Phonem und zumindest ein Teil der Zweigknoten oder Zweigenden einem Wortende. Die Folge der Phoneme von der Baumwurzel zu solch einem Knoten oder Zweigende stellt dann die phonetische Transkription eines Wortes dar.

Das aus dem eingangs genannten bekannten Verfahren hervorgehende Prinzip der zeitsynchronen Breitensuche führt die Vergleiche jedes Testsignals mit einer Anzahl Referenzsignalen und damit die Fortsetzung der jeweiligen Teilhypothesen quasi parallel durch. Wenn dies auf das baumorganisierte Aussprachelexikon angewendet wird, ergibt sich eine deutliche Reduktion des Suchraums und damit auch des Suchaufwandes bzw. der Rechenzeit. Die kompaktere Darstellung der Wörter durch Zusammenlegen von Wörtern mit gleichen Wortanfängen führt direkt zu einem geringeren Suchraum. Sehr wesentlich kommt jedoch hinzu, daß wegen des ständigen Vergleichs aller Teilhypothesen mit einem Schwellwert und wegen des Beendens von Teilhypothesen, die den Schwellwert überschreiten, mehr als 95 % des Suchaufwandes auf die Anfänge der jeweils nach einem Wortende neu begonnen Teilhypothesen entfällt, wenn als Anfänge die ersten zwei Phoneme eines Wortes gezählt werden. Bei dem bekannten linearen Lexikon mit beispielsweise 12.000 Wörtern wären dann jeweils 24.000 Phoneme zu bearbeiten, während es bei der erfindungsgemäßen Baumstruktur des Vokabulars nur 30 Phoneme als erste Zweige, d.h. in der ersten Ebene des Baum zuzüglich etwa 350 Phoneme in der zweiten Ebene sind.

Als nachteilig bei der Baumstruktur könnte angesehen werden, daß bei Verwendung eines statistischen n-Gramm-Sprachmodells schon für n ≥ 2, d.h. also schon bei Verwendung eines Bigramm-Sprachmodells, Kopien von Bäumen angelegt werden müssen. Der Grund dafür ist, daß die Wortidentität an der Baumwurzel noch nicht bekannt ist, so daß die Sprachmodellbewertung erst am Wortende vorgenommen werden kann und nicht schon am Beginn jeder Teilhypothese. Dadurch vergrößert sich der mögliche Suchraum entsprechend der Größe des Vokabulars. Praktische Ergebnisse haben jedoch gezeigt, daß wegen des Schwellwertvergleichs und des Beendens von ungünstigen Teilhypothesen tatsächlich nur wenige Kopien notwendig sind. Es ist auch möglich, die Sprachmodellbewertung am Wortende in einer Weise vorzunehmen, wie dies in der prioritätsgleichen Patentanmeldung P 41 30 632.5 (PHD 91-137) angegeben ist. Dieses Verfahren stellt zwar bezüglich der optimalen Wortgrenze ein gewisses Näherungsverfahren dar, jedoch wirken sich dadurch verursachte Fehler praktisch nicht merklich aus. Bei Verwendung dieses Verfahrens ist es dann nicht erforderlich, für ein Bigramm-Sprachmodell für jedes Wortende eine Kopie des Suchbaums anzulegen.

Wegen des großen potentiellen Suchraums ist jedoch eine sehr sorgfältige Organisation des gesamten Erkennungsverfahrens notwendig. Dafür werden die jeweils aktiven Bäume und Zweige erfindungsgemäß in bestimmter Weise in Listen organisiert, so daß der Suchaufwand und der Speicherplatzbedarf im wesentlichen unabhängig von der Größe des potentiellen Suchraums ist.

Eine weitere Einschränkung des Suchraums ist im übrigen ferner möglich, wenn eine Vorabbewertung auf Phonemebene durchgeführt wird, wie dies in der ebenfalls prioritätsgleichen Patentanmeldung P 41 30 633.3 (PHD 91-136) angegeben ist. Die Anwendung dieser Vorabbewertung wird später etwas näher erläutert.

Bei der erfindungsgemäßen Organisation der Listen kann es zweckmäßig sein, in jeder Zeile der ersten Liste außerdem einen Hinweis auf die Suchliste aufzunehmen, um auf einfache Weise zu erreichen, daß die Listenplätze des Suchraums, die zu jeweils einem Baum gehören, einen zusammenhängenden Bereich bilden. Ferner ist die Verwendung einer Hilfsliste zweckmäßig, in der zu jeder Zeile der ersten Liste die Baumidentität, d.h. das Wort, von dem aus der Baum begonnen wurde, mit der Angabe der zugehörigen Zeile in der ersten Liste enthalten ist. Damit läßt sich ohne wesentlichen Suchaufwand ermitteln, ob ein von diesem Wort ausgehender Baum bereits gestartet war und noch aktiv ist. In der Zweigliste enthält jeder Listenplatz für einen aktiven Zweig zweckmäßig die Angabe dieses Zweiges, beispielsweise die Zweignummer, wenn davon ausgegangen wird, daß alle Zweige des Vokabularbaums aufeinanderfolgend numeriert sind. Auch hierfür kann die Verwendung einer Hilfsliste zweckmäßig sein, die zu jeder Zweignummer eine Angabe enthält, in welchen Listenplätzen der Zweigliste dieser Zweig aktiv ist.

Wenn die Phoneme in einer Weise aufgebaut sind, wie dies in der DE-OS 37 11 342 angegeben ist, wo aufeinanderfolgende Referenzwerte innerhalb des Phonems zumindest abschnittsweise gleich sind, braucht die Suchliste nur einen Listenplatz für jeden unterschiedlichen Referenzwert zu haben. In jedem Listenplatz muß dann aber der Bewertungswert und der Hinweis auf den Anfang der Folge für jeden Zustand getrennt geführt werden. Eine Anzahl Möglichkeiten, um diese Hinweise auf einfache und schnelle Weise mit oder ohne die Hilfsliste zu erhalten, sind in den Unteransprüchen angegeben.

Die Erfindung bezieht sich auch auf eine Anordnung für Spracherkennung gemäß Anspruch 9, die gemäß den vorstehenden Verfahrensschritten arbeitet.

Ausführungsbeispiele der Erfindung werden nachstehend anhand der Zeichnung näher erläutert. Es zeigen:
Fig. 1a schematisch den Aufbau des Vokabulars als Baum,
Fig. 1b eine Struktur einer Liste, die den Aufbau des Vokabulars als Baum wiedergibt und die für die Erkennung verwendet wird,
Fig. 2 schematisch den Aufbau des Erkennungsverfahrens,
Fig. 3 den Aufbau und den Zusammenhang der wichtigsten beim erfindungsgemäßen Verfahren verwendeten Listen.
Fig. 4 ein Blockschaltbild einer erfindungsgemäßen Anordnung.

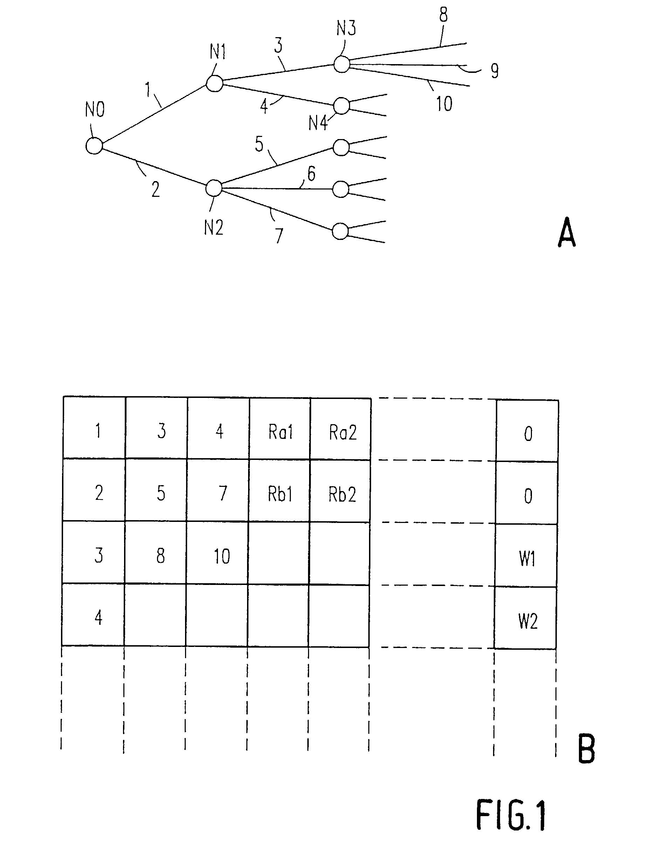

Für die Erläuterung des Aufbaues des Vokabulars als Baum zeigt Fig. 1 ein vereinfachtes Bild auf der Basis einer sehr geringen Anzahl unterschiedlicher Phoneme, das als Baum mit Knoten N0, N1, N2 und Verbindungen oder Zweige 1, 2, 3 aufgebaut ist. Jede Verbindung stellt ein besonderes Phonem dar. Ein spezielles Phonem kann einer oder mehreren Verbindungen zugeordnet sein. Der Anfangsknoten N0 wird als Wurzel betrachtet. In der Praxis ist die Anzahl von Phonemen, die von dieser Wurzel ausgehen, wesentlich größer. Von dem Knoten N0 gehen zwei Phoneme 1 und 2 aus, mit denen also alle Wörter des hier angenommenen Vokabulars beginnen, d.h. ein erster Teil der Wörter hat das Phonem 1 am Anfang, und der restliche zweite Teil der Wörter hat das Phonem 2 am Anfang. Von dem Knoten N1 am Ende des Phonems 1 gehen zwei weitere Phoneme 3 und 4 aus, d.h. in allen Wörtern des ersten Teils folgt dem Phonem 1 entweder das Phonem 3 oder das Phonem 4. Von dem Knoten N2 am Ende des Phonems 2 gehen drei Phoneme 5, 6 und 7 aus, d.h. in dem zweiten Teil der Wörter können dem Phonem 2 entweder das Phonem 5, das Phonem 6 oder das Phonem 7 folgen. Von dem Knoten N3 gehen ebenfalls drei Phoneme 8, 9 und 10 aus, d.h. diese Zweige sind Wortgruppen zugeordnet, denen nach dem Phonem 1 und dem folgenden Phonem 3 dann entweder das Phonem 8, das Phonem 9 oder das Phonem 10 folgt. Es sei bemerkt, daß von den Phonemen 1 bis 10 einige untereinander akustisch gleich sein können, d.h. sie werden auch durch dieselben Referenzwerte dargestellt, aber da sie an verschiedener Stelle im Baum des Vokabulars vorkommen, müssen sie bei der Erkennung auch getrennt behandelt werden.

Diese Baumstruktur des Vokabulars muß nun in einer Form gespeichert werden, damit dieses für die Erkennung verwendbar ist. Dies geschieht beispielsweise in Form einer Liste, die in Fig. 1b dargestellt ist. Dabei wird davon ausgegangen, daß die einzelnen Phoneme in der Baumstruktur gemäß ihrer Lage im Baum durchnumeriert sind.

Jeder Phonemnummer ist dann ein Speicherfeld zugeordnet, das in der Fig. 1b ebenfalls als eine Reihe von Plätzen dargestellt ist, wobei im ersten Platz die Nummer des Phonems angegeben ist und in den beiden Folgeplätzen die erste und die letzte Nummer der Phoneme, die diesem ersten Phonem folgen. Im ersten Speicherfeld sind dies zum Phonem 1 die Phoneme 3 und 4. In den folgenden Plätzen sind Referenzwerte Rₐ₁, Rₐ₂, usw. direkt oder als Adressen eines weiteren Speichers bzw. Speicherbereichs gespeichert, an dem die Referenzwerte gespeichert sind sowie die während der Erkennung entstehenden Werte gespeichert werden.

In dem zweiten Speicherfeld, das dem Phonem 2 zugeordnet ist, ist im zweiten und dritten Platz die erste Nummer 5 und die letzte Nummer 7 der diesem Phonem 2 folgenden Phoneme gespeichert, und danach folgen dann wieder die Referenzwerte R_{b1}, R_{b2}, usw. bzw. die entsprechenden Speicherplätze des weiteren Speichers für diese Referenzwerte.

Im dritten Feld, das dem Phonem Nr. 3 zugeordnet ist, ist im zweiten und dritten Feld wieder die Nummer des ersten und letzten folgenden Phonems angegeben, und im letzten Feld ist eine Wortnummer W1 für ein Wort angegeben, das durch die Folge der im Knoten N3 endenden Phoneme 1 und 3 gebildet ist. Bei dem Knoten N1 und N2 wird angenommen, daß dort noch keine Wörter geendet haben, da Wörter, die nur aus einem einzigen Phonem bestehen, in natürlicher Sprache praktisch nicht vorkommen. In den ganz rechten Feldern der ersten beiden Speicherplätze ist daher eine Information vorhanden, die angibt, daß diesen Zweigknoten keine Wörter zugeordnet sind, beispielsweise ist der Wert 0 in diesen Plätzen enthalten.

Entsprechend sind in der vierten Zeile für das Phonem 4 der zweite und der dritte Platz für die Nummern der Folgephoneme vorgesehen, die hier der Einfachheit halber nicht mehr angegeben sind, und es wird angenommen, daß dem Knoten N4 ein Wort W2 zugeordnet ist, das also aus der Folge der Phoneme 1 und 4 besteht. Es sei bemerkt, daß in einem in der Fig. la entsprechenden realen Vokabularbaum viele Knoten von Zweigen in den weiteren, nicht dargestellten Ebenen auftreten, denen ebenfalls ein Wort zugeordnet oder nicht zugeordnet ist.

Bei dem gesamten Erkennungsverfahren können, wie auch bei bekannten Erkennungsverfahren mit einem linearen Lexikon, im wesentlichen drei Abschnitte unterschieden werden. Einer dieser Abschnitte ist die Steuerung, die den Ablauf der beiden anderen Abschnitte und die Verwaltung der Zwischenergebnisse und die Ausgabe der Ergebnisse am Ende des Sprachsignals steuert. Der zweite Abschnitt betrifft die akustische Rekombination, die die wahrscheinlichste Folge von Zuständen bzw. Referenzwerten, also die wahrscheinlichste Teilhypothese innerhalb eines Wortes bestimmt. Der dritte Abschnitt betrifft die Sprachmodellrekombination, wobei die wahrscheinlichste Verknüpfung von Wörtern ermittelt wird. In diesem Abschnitt werden auch Sprachmodellwerte berücksichtigt. Durch die Verwendung eines als Baum aufgebauten Vokabulars aus Phoneme darstellenden Zweigen werden hier jedoch auch während der akustischen Rekombination Fortsetzungen von Zweigen bestimmt. Bei der Sprachmodellrekombination wird der Aufbau neuer Bäume oder die Neuaktivierung des Anfangs bereits bestehender Bäume vorgenommen wird, was in jedem Falle den Start der Zweige der ersten Ebene des Vokabularbaums bedeutet. Es werden also in beiden Fällen neue Zweige in den weiterführenden Suchablauf aufgenommen, jedoch zu unterschiedlichen Bedingungen und Voraussetzungen.

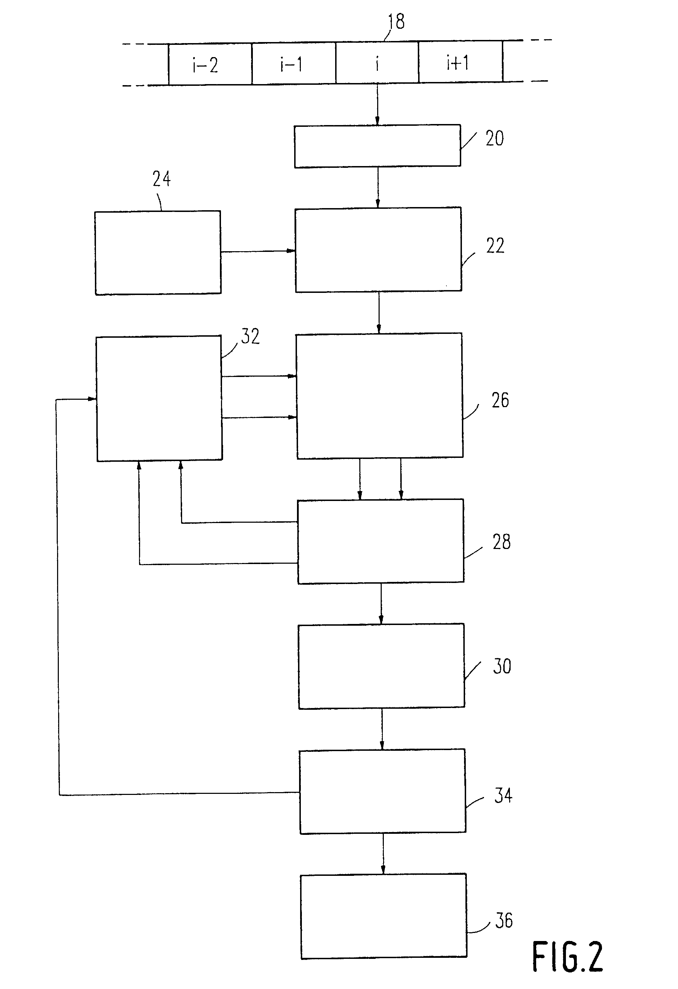

Das grobe Schema des Such- und Erkennungsverfahrens kann anhand der Fig. 2 näher erkannt werden. Ein kontinuierliches Sprachsignal, das über ein Mikrofon aus einem akustischen Sprachsignal gewonnen wurde, wird als eine Folge von zeitdiskreten Abtastwerten 18, denen Zeitindices i-2, i-1, i, i+1 zugeordnet sind, einer Vorverarbeitung 20 zugeführt, die daraus eine Folge von Testsignalen bestimmt, die jeweils einen Abschnitt des Sprachsignals charakterisieren. Die Testsignale werden in einer Einheit 22 mit Referenzsignalen aus einem entsprechenden Speicher 24 verglichen und die Vergleichsergebnisse als Abstandswerte werden am Ausgang abgegeben.

Diese Abstandswerte werden im Block 26 für die dynamische Zeitanpassung mit Hilfe der dynamischen Programmierung verwendet, wobei neue Bewertungswerte gebildet werden. Diese werden einem Block 28 zugeführt und dort mit einem Schwellwert verglichen, wobei Teilhypothesen, deren Bewertungswerte den Schwellwert überschreiten, nicht weitergeführt werden. Weiterhin wird im Block 28 festgestellt, ob bzw. welche Teilhypothesen ein Phonemende erreicht haben, wofür dann die fortzusetzenden Phoneme anhand der in Fig. lb gezeigten Liste bestimmt werden. Außerdem wird geprüft, ob ein erreichtes Phonemende auch gleichzeitig ein Wortende darstellt. Falls dies zutrifft, wird das entsprechende Wort mit den zugehörigen Angaben in eine Wortliste 30 eingeschrieben. Dies stellt den Übergang zum Abschnitt der Sprachmodellrekombination dar. Die Angaben für die nicht beendeten Teilhypothesen, d.h. die Bewertungswerte und die Hinweise auf die Anfänge dieser Teilhypothesen sowie deren Fortsetzung auf folgende Phoneme werden einem Block 32 zugeführt. Dieser startet abhängig von der Sprachmodellrekombination neue Bäume und deren ersten Phoneme, d.h. neue Teilhypothesen. Er führt auch die dafür erzeugten Bewertungswerte und Hinweise auf Anfänge zusammen mit den von dem Block 28 zugeführten Angaben dem Block 26 wieder zu, damit das nächste Testsignal bzw. die daraus gebildeten Abstandswerte verarbeitet werden können.

Der Inhalt der Wortendeliste 30 wird nun dem Block 34 zur Sprachmodellrekombination zugeführt. Dafür wird zunächst dem Bewertungswert jedes Wortes der zugehörige Sprachmodellwert zugefügt. Wenn dasselbe Wort mehrmals auftritt, was nur von verschiedenen Vorgängerworten (oder Wortkombinationen abhängig vom Sprachmodell) ausgehend erfolgen kann, wird nur das Wort mit dem besten Bewertungsergebnis, das durch die Summe des Bewertungswerts und des Sprachmodellwerts gebildet ist, weitergeführt. Diese Wörter werden zum einen dem Steuerabschnitt 36 zur Abspeicherung in der Ergebnisliste übergeben, und zum anderen wird damit der Block 32 angesteuert, um, wie oben bereits angegeben, neue Bäume und damit neue Teilhypothesen zu starten.

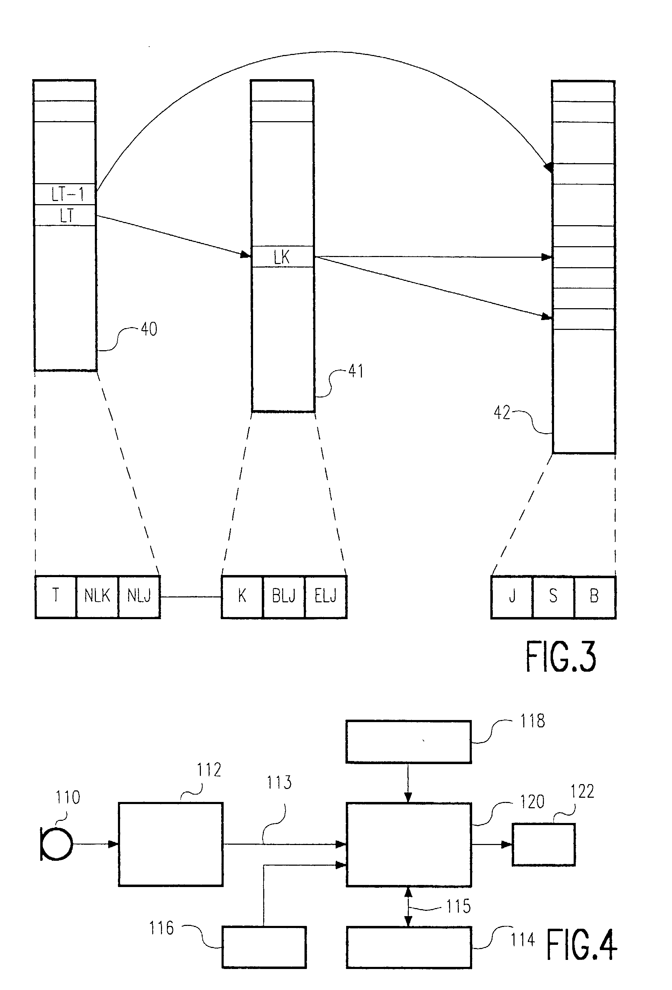

Bei dem Ablauf des Verfahrens werden mehrere Listen verwendet, von denen die wichtigsten in Fig. 3 mit einer Andeutung des Zusammenhangs und mit dem genaueren Aufbau der einzelnen Listenplätze dargestellt sind. Dies ist zunächst die erste Liste oder Baumliste 40, die für jeden Suchbaum, d.h. für jedes Bündel von Teilhypothesen mit einem gemeinsamen Ursprung, einen Listenplatz LT hat. Im ersten Abschnitt des Listenplatzes ist eine Identifizierung T des jeweiligen Baums enthalten, die bei Verwendung des Bigram-Sprachmodells direkt das Vorgängerwort angeben kann. Im zweiten Abschnitt jedes Listenplatzes ist ein Hinweis NLK auf einen Listenplatz einer Zweigliste 41 enthalten, und im dritten Abschnitt ist ein Hinweis NLJ auf einen Listenplatz einer Suchliste 42 enthalten.

Jeder Listenplatz der Zweigliste 41 ist einem aktiven Zweig zugeordnet, d.h. einem Phonem, in dem der Suchvorgang gerade verläuft und dessen Nummer K im ersten Abschnitt des Speicherplatzes angegeben ist. In den zweiten und dritten Abschnitten ist ein Hinweis BLJ und ELJ auf den ersten und den letzten Listenplatz eines zusammenhängenden Bereichs von Listenplätzen in der Suchliste 42 angegeben. Dieser zusammenhängende Bereich ist den aktiven Referenzwerten innerhalb des Zweiges K zugeordnet und enthält im ersten Abschnitt die Ordnungsnummer J des Referenzwertes innerhalb des Phonems K, im zweiten Abschnitt S den Bewertungswert, der während vorangegangener Vergleiche erreicht oder beim Neustart des Zweiges eingetragen worden ist, und im dritten Abschnitt einen Hinweis B auf den Anfang einer Folge von Referenzwerten, die sich über mehrere Phoneme erstrecken kann.

Zu Beginn des gesamten Verfahrens, d.h. vor Beginn des Sprachsignals, wird zunächst in die Baumliste 40 ein Listenplatz eingeschrieben, der den Anfang der zu erkennenden Wortkette darstellt, aber keinem Vorgängerwort zugeordnet werden kann. Zu diesem Baum werden in die Zweigliste 41 die ersten Zweige, d.h. die erste Ebene des Vokabularbaums eingetragen, und in die Suchliste 42 werden die zugehörigen Referenzwerte eingetragen.

Mit jedem folgenden Testsignal werden nun die bei dem Vergleichen mit den Referenzwerten ermittelten Abstandswerte zu den entsprechenden Bewertungswerten in den Listenplätzen der Suchliste 42 zur Bildung neuer Bewertungswerte addiert, so daß sich jeweils ein minimaler neuer Bewertungswert ergibt. Für die Adressierung der einzelnen Referenzwerte, für die die Abstandswerte und die neuen Bewertungswerte gebildet werden, werden nacheinander alle aktiven Listenplätze der Baumliste 40 adressiert, wobei zu berücksichtigen ist, daß während des fortschreitenden Suchablaufs eine Vielzahl von Suchbäumen aktiv sind. Zu jedem Listenplatz der Baumliste werden die zugehörigen Listenplätze der Zweigliste 41 nacheinander adressiert, und zwar jeweils ausgehend vom Anfang bzw. von dem letzten Listenplatz bei dem vorhergehenden Baum. Deshalb ist in jedem Listenplatz der Baumliste 40 auch nur der letzte zugehörige Listenplatz der Zweigliste 41 angegeben. Jeder Zweiglistenplatz ruft dann über die darin angegebenen Suchlistenplätze die zugehörigen Referenzwerte auf. Dabei wird gleichzeitig der niedrigste Bewertungswert in allen Listenplätzen der Suchliste 42 ermittelt, aus dem anschließend ein Schwellwert gebildet wird.

Wenn auf diese Weise alle aktiven Listenplätze der Baumliste 40 und damit alle aktiven Listenplätze der Zweigliste 41 abgearbeitet sind, wird dieser Adressiervorgang wiederholt, wobei nunmehr alle Unterschiedssummen in der Suchliste 42 mit dem Schwellwert verglichen werden. Die Listenplätze für diejenigen Referenzwerte, deren Bewertungswerte den Schwellwert überschreiten, werden gelöscht. Dies kann auf einfachste Weise dadurch erfolgen, daß in die Suchliste 42 die nicht gelöschten Speicherplätze so zurückübertragen werden, daß sich wieder ein zusammenhängender Bereich ergibt. Die gegebenenfalls geänderten Listenplätze werden in den zweiten und dritten Abschnitten des betreffenden Listenplatzes der Zweigliste 41 eingetragen.

Wenn dabei in der Suchliste 42 der letzte Referenzwert aktiv ist und nicht gelöscht wurde und zum Ende des Phonems, das zu dem momentan bearbeiteten Listenplatz der Zweigliste 41 gehört, ein Wort des Vokabulars gehört, wird dieses Wort zusammen mit der im ersten Abschnitt des zugehörigen Listenplatzes der Wortliste angegebenen Baumidentität sowie mit dem Bewertungswert und den Hinweisen, die im zweiten und dritten Abschnitt des zugehörigen Listenplatzes des letzten Referenzwertes in der Suchliste enthalten sind, in der Wortendeliste gespeichert. Schließlich wird noch geprüft, ob zu dem betreffenden Listenplatz der Zweigliste 41 überhaupt noch ein aktiver Referenzwert, d.h. ein nicht gelöschter Listenplatz der Suchliste 42 gehört, und wenn dies der Fall ist, wird der Inhalt dieses Listenplatzes wieder in die Zweigliste 41 zurückgeschrieben, so daß sich stets ein zusammenhängender Bereich ergibt.

Schließlich wird noch geprüft, ob für den in die Zweigliste 41 zurückgeschriebener Listenplatz einer der beiden letzten Referenzwerte in der Suchliste 42 aktiv ist, und wenn dies der Fall ist, wird über die Vokabularliste festgestellt, welche Phoneme dem Phonem, das in dem Listenplatz der Zweigliste 41 angegeben ist, folgen können, und für diese Phoneme werden entsprechende Listenplätze in der Zweigliste 41 und in der Suchliste 42 angelegt. An dieser Stelle kann auch eine Vorabbewertung vorgenommen werden, wie diese in der prioritätsgleichen Patentanmeldung P 41 30 633.3 (PHD 91-136) angegeben ist. In diesem Falle werden in der Zweigliste 41 und der Suchliste 42 nur für solche Phoneme bzw. Referenzwerte Listenplätze angelegt, für das die Vorabbewertung einen ausreichend günstigen Bewertungswert ergeben hat.

Damit ist nun ein Listenplatz der Zweigliste 41 vollständig abgearbeitet, und es kann der nächste Listenplatz der Zweigliste 41 aufgerufen werden, für den wieder die Bewertungswerte der zugehörigen Referenzwerte mit einem Schwellwert verglichen werden, usw.

Wenn der letzte Listenplatz eines zusammenhängenden Bereichs von Listenplätzen der Zweigliste 41, auf den der momentane Listenplatz der Baumliste 40 einen Hinweis enthält, abgearbeitet ist, wird geprüft, ob in der Zweigliste 41 überhaupt noch Listenplätze, die zu diesem Listenplatz der Baumliste gehören, übriggeblieben sind. Wenn dies der Fall ist, wird der betreffende Listenplatz der Baumliste 40 wieder zurückgeschrieben, andernfalls ist der Baum automatisch dadurch gelöscht, daß er nicht mehr in der Baumliste 40 enthalten ist.

Anschließend wird die Wortendeliste verarbeitet, wobei zu dem Bewertungswert, der zu jedem Wort gespeichert ist, ein Sprachmodellwert addiert wird, der von dem verwendeten Sprachmodell abhängt. Wenn nun in der Wortendeliste gleiche Wörter enthalten sind, die also von verschiedenen Vorgängerwörtern ausgegangen sind, werden alle Wörter außer dem mit der kleinsten Summe aus Bewertungswert und Sprachmodellwert gelöscht. Die übrigbleibenden Wörter werden nun in der Ergebnisliste gespeichert, wo sie für die Zurückverfolgung der insgesamt besten Hypothese am Ende des Sprachsignals zur Verfügung stehen. Außerdem werden für diese Wörter in der Baumliste 40 gegebenenfalls neue Listenplätze angelegt. Dafür wird zunächst geprüft, ob bereits ein Listenplatz in der Baumliste 40 mit der gleichen Identität, d.h. mit dem gleichen Inhalt des ersten Abschnitts vorhanden ist. Um diese Prüfung schneller durchzuführen, wird bei jedem Eintrag oder bei jedem Zurückschreiben eines Listenplatzes in die Baumliste ein Listenplatz in einer Hilfsliste eingeschrieben, der zu jeder Baumidentität den Listenplatz in der Baumliste 40 enthält. Dadurch kann die Prüfung, ob ein Baum mit einer bestimmten Identität bereits vorhanden ist und an welcher Stelle er vorhanden ist, sehr schnell durchgeführt werden. Wenn für das betreffende Wort der Wortendeliste kein Baum in der Baumliste 40 aktiv ist, wird dafür in der Baumliste 40 ein neuer Listenplatz angelegt, und für jeden Baum, der gemäß der Wortendeliste in der Baumliste 40 bereits vorhanden war oder neu angelegt worden ist, werden neue Listenplätze in der Zweigliste 41 mit den Phonemen der ersten Ebene des Vokabularbaums angelegt, sofern sie nicht schon darin vorhanden waren, und es werden entsprechende Listenplätze für die ersten Referenzwerte der Phoneme der ersten Ebene in der Suchliste 42 angelegt und die entsprechenden Angaben eingeschrieben. Auch an dieser Stelle kann die Vorabbewertung berücksichtigt werden, indem nur solche Listenplätze in die Zweigliste 41 eingeschrieben werden, für die die Phoneme eine ausreichend günstige Bewertung erhalten haben.

Nun kann das nächste Testsignal verarbeiten werden. Wenn das letzte Testsignal verarbeitet wurde, wird von dem Wort in der Wortendeliste, das den besten Bewertungswert hat, ausgehend die Ergebnisliste durchgegangen und die dabei entstehende Wortfolge als erkannte Wortfolge ausgegeben.

Das vorstehend beschriebene Verfahren bezieht sich insbesondere auf die Verwendung eines Bigramm-Sprachmodells. Bei Verwendung eines Unigramm-Sprachmodells ist es nicht notwendig, für jedes bei einem Testsignal endende Wort einen getrennten Suchbaum anzulegen, so daß auch die Baumliste und damit die Zweigliste nicht erforderlich sind, vielmehr kann der Suchraum explizit aufgebaut werden.

Fig. 4 zeigt ein vereinfachtes Blockschaltbild einer Anordnung zur Spracherkennung. Darin wird das über das Mikrofon 110 aufgenommene Sprachsignal in einer Anordnung 112 vorverabeitet, insbesondere werden für aufeinanderfolgende Sprachsignalabschnitte die spektralen Anteile in digitaler Form ermittelt, wobei die Gesamtheit der jeweils einen Sprachsignalabschnitt darstellenden Werte ein Testsignal darstellt. Diese Testsignale, die auf der Verbindung 113 auftreten, werden der Erkennungsanordnung 120 zugeführt. Diese Erkennungsanordnung erzeugt die verschiedenen Hypothesen, wobei die im Speicher 116 enthaltenen Referenzsignale verwendet werden. Am Ende des Sprachsignals wird von der Anordnung 120 die Folge der erkannten Wörter einer Ausgabeanordnung 122, z.B. einer Anzeigeanordnung oder einem Drucker, zugeführt.

Die Anordnung 120 für die eigentliche Erkennung kann beispielsweise gemäß der DE-OS 37 10 507 aufgebaut sein. Bei dieser werden während der Suche, d.h. während der Verarbeitung der aufeinanderfolgenden Testsignale, eine Vielzahl von Hypothesen in einem aus den Testsignalen und den Referenzsignalen gebildeten Suchraum aufgebaut, wobei Hypothesen mit einem ungünstigen Bewertungswert, der einen Schwellwert überschreitet, abgebrochen werden, und wenn jeweils ein mögliches Wortende erreicht wird, erfolgt eine Verzweigung auf eine Anzahl weiterführender Hypothesen durch jeweils neu zu beginnende Wörter, die vorzugsweise nach einem Sprachmodell bestimmt werden. Allgemein ist die Verwendung eines derartigen Suchraums beschrieben in einem Aufsatz von H. Ney et al., "A data driven organization of the dynamic programming beam search for continuous speech recognition"; 1987, IEEE, No. CH 2396-0/87/0000/0633.

Während der Suche werden Zwischenergebnisse in einen Ergebnisspeicher 114 geschrieben, der also auch die verschiedenen Listen enthält. Zwischenergebnisse sind in diesem Beispiel alle Wörter, deren Ende während der Suche erreicht wird, zusammen mit den zugeordneten Bewertungswerten den Hinweisen auf die jeweiligen Vorgängerwörter. Die Fortsetzungen während der Suche basieren auf der Auswahl von einem oder mehreren minimalen Bewertungswerten. Die weiteren Bewertungswerte für nachfolgend endende Wörter während der Fortsetzung der Suche werden unter Verwendung der vorhergehenden Bewertungswerte bestimmt, die aus dem Ergebnisspeicher 114 ausgelesen und der Anordnung 120 zugeführt werden müssen. Die Verbindung 115 zwischen dem Ergebnisspeicher 114 und der Anordnung 120 ist daher bidirektional. Die weiteren Bewertungswerte werden aus den Bewertungswerten der endenden Wörter selbst und den aus dem Ergebnisspeicher 114 ausgelesenen Bewertungswerten bestimmt, erhöht um den Sprachmodellwert aus einem Speicher 118 für die Kombination des endenden Wortes und der Kette der letzten vorhergehenden Wörter. Diese Kette umfaßt ein Wort (Bigram), zwei Wörter (Trigram), und so weiter. Am Ende des Sprachsignals bestimmt die Anordnung 120 die Folge von Wörtern, die die höchste Wahrscheinlichkeit haben, auf der Basis des minimalen Gesamt-Bewertungswertes über den Ergebnisspeicher.

## Patentansprüche

1. Verfahren zum Erkennen einer Folge von Wörtern in einem Sprachsignal mit folgenden Schritten:
- Zu wiederholten Zeitpunkten wird das Sprachsignal abgetastet, um eine Folge von Testsignalen zu erzeugen;
- es wird ein signalweiser Vergleich mit Bewertung zwischen den Testsignalen und verschiedenen Folgen von Referenzsignalen durchgeführt, die zu einem Satz von Folgen von Referenzsignalen gehören, wobei jede Folge von Referenzsignalen ein Wort des Vokabulars darstellt, und für jedes beendete Wort wird ein Wortergebnis abgeleitet, das einen Wort-Bewertungswert, einen Gesamt-Bewertungswert, der von dem Wort-Bewertungswert und von einem Sprachmodellwert abgeleitet ist, der einer Kombination des beendeten Wortes und einer Folge von beendeten Vorgängerwörtern mit einheitlicher Länge zugeordnet ist, und außerdem einen Hinweis auf das letzte Wort dieser Folge umfaßt;
- der Vergleich mit Bewertung wird für nachfolgende Testsignale weitergeführt, und das Sprachsignal wird auf der Basis der Auswahl des minimalen Wertes der Gesamt-Bewertungswerte erkannt;
**dadurch gekennzeichnet,** daß das Vokabular als Baum mit einer Wurzel aufgebaut ist, worin jeder Baumzweig eine Folge von einem oder mehreren Referenzsignalen umfaßt und einem Sprachelement zugeordnet ist und jedes Vokabularwort einem bestimmten Zweigknoten oder Zweigende zugeordnet und durch eine Kette von Folgen von Referenzsignalen von der Wurzel bis zum betreffenden Knoten oder Ende dargestellt ist, und daß für jedes einer Anzahl Wörter, die gleichzeitig enden, getrennt Bewertungsergebnisse von der genannten Fortsetzung des Vergleichs mit Bewertung nach dem Start bei der Wurzel, zusammen mit einem Hinweis auf das zugeordnete beendete Wort, gespeichert wird, während von identischen Wörtern bei der genannten Mehrzahl nur dasjenige mit dem niedrigsten Gesamt-Bewertungswert behalten wird.

2. Verfahren nach Anspruch 1,
**dadurch gekennzeichnet**, daß zur Durchführung der getrennten Speicherung eine erste Liste zwischengespeichert wird, die eine variable Anzahl von Zeilen aufweist, von denen jede einen Hinweis auf einen neuen Teil eines ersten Speichers und einen Hinweis auf das zugeordnete endende Wort umfaßt.

3. Verfahren nach Anspruch 2,
**dadurch gekennzeichnet**, daß jeder neue Teil des ersten Speichers eine Anzahl Speicherstellen umfaßt, von denen jede einen Hinweis auf ein Referenzsignal in dem Vokabularbaum und einen zugehörigen Bewertungswert aufweist.

4. Verfahren nach einem der Ansprüche 1 bis 3,
**dadurch gekennzeichnet**, daß nach dem Vergleich mit Bewertung jedes Testsignals mit Referenzwerten, wobei in alle Speicherplätze des zugeordneten Teils des ersten Speichers neue Bewertungswerte gespeichert worden sind und das Minimum der Bewertungswerte ermittelt worden ist, alle Bewertungswerte mit einem ersten Schwellwert verglichen werden, der von dem minimalen Bewertungswert abgeleitet ist, wobei alle Speicherstellen mit einem Bewertungswert gelöscht werden, der diesen ersten Schwellwert überschreitet.

5. Verfahren nach einem der Ansprüche 2 bis 4,
**dadurch gekennzeichnet**, daß
- jeder Hinweis auf einen neuen Teils des ersten Speichers in der ersten Liste einen Hinweis auf eine Anzahl Speicherplätze einer Zweigliste umfaßt,
- jeder Speicherplatz einen Hinweis auf eine Anzahl Speicherplätze einer Suchliste umfaßt,
- jeder Speicherplatz der Suchliste einen Hinweis auf wenigstens ein Referenzsignal umfaßt, der für den Vergleich mit Bewertung mit dem nächsten Testsignal verwendet wird,
- einen Hinweis auf das Vorgängerwort und den Bewertungswert,
- wobei jeder Speicherplatz der Suchliste nur über die erste Liste und die Zweigliste adressiert wird.

6. Verfahren nach Anspruch 5,
**dadurch gekennzeichnet**, daß nach dem Durchführen des Vergleichs mit Bewertung für jedes der Testsignale alle Speicherplätze der Suchliste ausgelesen werden und die entsprechenden Bewertungswerte mit dem Schwellwert verglichen werden, wobei nur solche Speicherplätze der Suchliste zurückgeschrieben werden, deren zugehöriger Bewertungswert den Schwellwert nicht überschreitet, und daß jeder Speicherplatz der Zweigliste, der nur Hinweise auf gelöschte Speicherplätze der Suchliste enthält, gelöscht wird.

7. Verfahren nach Anspruch 6,
**dadurch gekennzeichnet**, daß für jeden zurückgeschriebenen Speicherplatz der Suchliste mit einem Hinweis auf ein letztes Referenzsignal einer Folge von Referenzsignalen, die einem Wort zugeordnet ist, ein Hinweis auf dieses Wort zusammen mit einem Hinweis auf das zugehörige wenigstens eine Vorgängerwort und der zugehörige Bewertungswert in eine neue Speicherstelle einer Wortendeliste eingeschrieben wird, daß ein Sprachmodellwert zu jedem Bewertungswert zum Erhalten eines Gesamt-Bewertungswertes addiert wird, wobei alle gleichen der endenden Wörter außer demjenigen mit dem kleinsten Gesamt-Bewertungswert gelöscht werden, und daß alle nicht gelöschten Speicherstellen der Wortendeliste in neue Speicherstellen eines zweiten Speichers übertragen werden.

8. Verfahren nach einem der Ansprüche 6 oder 7,
**dadurch gekennzeichnet**, daß für jeden in die Suchliste zurückgeschriebenen Speicherplatz, der einen Hinweis auf das letzte Referenzsignal eines ersten Baumzweiges enthält, ein neuer Speicherplatz der Zweigliste eingeschrieben wird, der einen Hinweis auf eine Anzahl neuer Speicherplätze der Suchliste enthält, wobei jeder Speicherplatz der Suchliste Hinweise auf Referenzsignale von weiteren Baumzweigen, die dem ersten Baumzweig folgen, enthält, und daß für jedes in einem Speicherplatz der Wortendeliste enthaltene Wort, das in den zweiten Speicher übertragen worden ist, ein neuer Speicherplatz der ersten Liste gebildet wird, der Hinweise auf eine Anzahl neuer Speicherplätze der Zweigliste enthält, und jeder neue Speicherplatz der Zweigliste Hinweise auf eine Anzahl neuer Speicherplätze der Suchliste enthält, wobei jeder neue Speicherplatz der Suchliste Hinweise auf Referenzwerte des ersten Zweiges des Vokabularbaums enthält.

9. Anordnung zum Erkennen einer Folge von Wörtern in einem Sprachsignal zur Durchführung des Verfahrens nach einem der Ansprüche 1 bis 8, mit:
- Abtastmitteln zum Abtasten des Sprachsignals zu aufeinanderfolgenden Zeitpunkten und zum Erzeugen eines Satzes von Testsignalen;
- Baumspeichermittel zum Speichern eines Vokabularbaums mit einer Wurzel und einer Anzahl Zweige, wobei jeder Zweig eine Folge von einem oder mehreren Referenzsignalen umfaßt und einem Sprachelement zugeordnet ist und jedes Vokabularwort einem bestimmten Zweigknoten oder Zweigende zugeordnet und durch eine Kette von Folgen von Referenzsignalen von der Wurzel bis zum betreffenden Knoten oder Ende dargestellt ist;
- Modellspeichermittel zum Speichern einer Vielzahl von Sprachmodellwerten, von denen jeder eindeutig einem bestimmten Vokabularwort und einer Folge einheitlicher Länge von Vorgängerwörtern zugeordnet ist;
- Vergleichs- und -Bewertungsmittel, die von den Abtastmitteln, von den Baumspeichermitteln und von den Modellspeichermitteln gespeist werden und einen signalweisen Vergleich mit Bewertung zwischen den Testsignalen und verschiedenen Folgen von Referenzsignalen durchführen und beim Beenden eines Wortes ein Wortergebnis ableiten, das einen Wort-Bewertungswert, einen von dem Wort-Bewertungswert und dem Sprachmodellwert, der diesem Wort und der Folge von Vorgängerwörtern zugeordnet ist, abgeleitet ist, und einen Hinweis auf das letzte Wort dieser Folge von Vorgängerwörtern umfaßt;
- Übertragungsmittel, die von den Vergleichs- und -Bewertungsmitteln gespeist werden, um unter Steuerung des gleichzeitigen Erreichens einer Mehrzahl nicht identischer Wörter weitere Ergebnisse aus den Vergleichs- und -Bewertungsmitteln von der Wurzel des Baumes an getrennt für jedes dieser nicht identischen Wörter in einen Zwischenspeicher zu übertragen;
- Entscheidungsmittel, die von den Vergleichs- und - Bewertungsmitteln und von dem Zwischenspeicher gespeist werden, um wahlweise die Folge von Referenzsignalen auf der Basis der Annehmbarkeit oder Nichtannehmbarkeit der zugehörigen Gesamt-Bewertungswerte fortzusetzen oder nicht fortzusetzen;
- Entscheidungsmittel, die von den Vergleichs- und - Bewertungsmitteln und von dem Zwischenspeicher gespeist werden, um das Sprachsignal auf der Basis des kleinsten unter den gleichzeitig vorhandenen Gesamt-Bewertungswerten zu erkennen.

## Claims

1. A method of recognizing a sequence of words in a speech signal, said method comprising the steps of:
- sampling the speech signal at recurrent instants to generate a series of test signals;
- executing a signal-by-signal matching and scoring between the test signals and various series of reference signals from a set of such series that each represent a vocabulary word, and for each ended word deriving a word result comprising a word score, an aggregate score derived from said word score and from a language model value assigned to a combination of the ended word and a uniform-length string of ended predecessor words, and also an indication to the last word of said string;
- proceeding with said matching and scoring for subsequent test signals and recognizing the speech signal on the basis of selecting the minimum value of the aggregate scores,
characterized in that the vocabulary is arranged as a tree with a root, in which each tree branch has a series of one or various reference signals and is assigned to a speech element and each vocabulary word is assigned to a particular branch junction or branch end and is represented by a series of reference signals from the root to the respective junction or end, and in that for each of a plurality of words ending simultaneously, scoring results of said proceeding of the matching with a score after the start at the root are stored separately together with an indication to the assigned ended word, whereas from identical words in said plurality only the word with the lowest aggregate score is kept.

2. The method as claimed in Claim 1, characterized in that for the separate storage a first list is buffered having a varying number of lines each containing an indication to a new part of a first memory and an indication to the assigned ending word.

3. The method as claimed in Claim 2, characterized in that each new part of said first memory comprises a number of memory locations each containing an indication of a reference signal in the vocabulary tree and a respective score.

4. The method as claimed in one of Claims 1 to 3, characterized in that after matching and scoring of each test signal with reference signals, while new scores are stored in all the locations of the assigned part of the first memory and the minimum score has been determined, all the scores are compared with a first threshold derived from the minimum score and all the locations having a score that surpasses said first threshold are erased.

5. The method as claimed in one of Claims 2 to 4, characterized
- in that each indication to a new part of the first memory has an indication to a number of memory locations of a branch list,
- in that each memory location contains an indication to a number of memory locations of a search list,
- in that each memory location of a search list contains an indication to at least one reference signal to be used for matching and scoring with the next test signal,
- by an indication to the predecessor word and the score,
- while each memory location of the search list is addressed only via the first list and the branch list.

6. The method as claimed in Claim 5, characterized in that after executing said matching and scoring for each of said test signals all the memory locations of the search list are read out and the respective scores are compared with the threshold, only such memory locations of the search list being written back whose respective score does not surpass the threshold, and in that each memory location of the branch list indicating only deleted memory locations of the search list is erased.

7. The method as claimed in Claim 6, characterized in that each time a memory location of the search list with an indication to a last reference signal of a series of reference signals assigned to a word is written back, an indication to this word together with an indication to the corresponding at least one predecessor word and the corresponding score is written into a new location of a word end list, in that a language model value is added with each score to obtain an aggregate score, thereby erasing all the words ending the same except the one having the lowest aggregate score, and in that all not erased memory locations of the word end list are transferred to new memory locations of a second memory.

8. The method as claimed in Claim 6 or 7, characterized in that for each memory location written back into the search list and indicating a last reference signal of a first tree branch, a new memory location of the branch list is written containing indications to a number of new memory locations of the search list, each memory location containing indications to reference signals of further tree branches following the first tree branch, and in that for each word contained in a memory location of the word end list transferred to the second memory, a new memory location of the first list is formed containing indications to a number of new memory locations of the branch list, each new memory location of the branch list containing indications to a number of new memory locations of the search list, whereas each new memory location of the search list contains indications to reference values of the first branch of the vocabulary tree.

9. An apparatus for recognizing a sequence of words in a speech signal for implementing the method as claimed in any of claims 1 through 8, the apparatus comprising:
- sampling means for sampling the speech at consecutive instants and for generating a set of test signals;
- tree storage means for storing a vocabulary tree with a root and a plurality of branches, each branch comprising a series of one or more reference signals and being assigned to a speech element and each vocabulary word being assigned to a particular branch junction or branch end and being represented by a string of series of reference signals from the root to the respective junction or end;
- model storage means for storing a plurality of language model values each uniquely assigned to a particular vocabulary word and a uniform-length string of predecessor words;
- matching-and-scoring means fed by the sampling means, by the tree storage means and by the model storage means and executing a signal-by-signal matching and scoring of the test signals and various series of reference signals and upon completing a word deriving a word result having a word score derived from the word score and the language model score assigned to this particular word and its series of predecessor words, and having an indication to the last word of the series of predecessor words;
- transmission means fed by the matching-and-scoring means for transmitting separately, in response to the simultaneous reading of a plurality of non-identical words, further results from the matching-and-scoring means from the root of said tree for each of these non-identical words to a buffer;
- decision means fed by said matching-and-scoring means and by said buffer for optionally continuing or not continuing the series of reference signals on the basis of acceptability or non-acceptability of the associated aggregate scores;
- and decision means fed by the matching-and-scoring means and by the buffer for recognizing the speech signal on the basis of the minimum among the aggregate scores that are simultaneously available.

## Revendications

1. Procédé de reconnaissance d'une séquence de mots dans un signal vocal présentant les étapes suivantes :
- à des moments répétés, le signal de parole est lu pour produire une séquence de signaux de test ;
- une comparaison sous forme d'un signal avec évaluation entre les signaux de test et différentes séquences de signaux de référence est effectuée, lesquels signaux font partie d'une série de séquences de signaux de référence, chaque séquence de signaux de référence représentant un mot du vocabulaire et, pour chaque mot terminé, un résultat de mot est dérivé et comprend une valeur d'évaluation de mot, une valeur d'évaluation globale qui est dérivée de la valeur d'évaluation de mot et d'une valeur de modèle de parole, qui est affectée à une combinaison du mot terminé et à une séquence de mots précédents terminés avec une longueur homogène et, par ailleurs, une indication sur le dernier mot de cette séquence ;
- la comparaison avec évaluation est transmise pour les signaux de test suivants et le signal de parole est reconnu sur la base de la sélection de la valeur minimale des valeurs d'évaluation globales,
caractérisé en ce que le vocabulaire est structuré comme un arbre avec une racine, chaque branche d'arbre comprenant une séquence d'un ou plusieurs signaux de référence et étant affectée à un élément de parole et chaque mot de vocabulaire est affecté à un noeud de branche ou une extrémité de branche déterminés et est représenté par une chaîne de séquences de signaux de référence de la racine jusqu'au noeud ou à l'extrémité correspondants et que, pour chacun des mots qui se terminent simultanément, des résultats séparés d'évaluation de la poursuite précitée de la comparaison avec l'évaluation après le début à la racine, ainsi qu'une indication du mot terminé affecté, sont enregistrés, tandis que seul celui présentant la valeur d'évaluation globale la plus basse étant obtenu parmi les mots identiques pour la majorité précitée.

2. Procédé selon la revendication 1,
caractérisé en ce que, pour l'exécution de l'enregistrement séparé, une première liste est sauvée à titre intermédiaire et présente un nombre variable de lignes dont chacune comprend une indication sur une nouvelle partie d'une première mémoire et une indication sur le mot se terminant qui lui est affecté.

3. Procédé selon la revendication 2,
caractérisé en ce que chaque nouvelle partie de la première mémoire comprend un nombre d'emplacements de mémoire dont chacun présente une indication sur un signal de référence dans l'arbre de vocabulaire et une valeur d'évaluation correspondante.

4. Procédé selon l'une des revendications 1 à 3,
caractérisé en ce qu'après la comparaison avec l'évaluation de chaque signal de test avec les valeurs de référence, de nouvelles valeurs d'évaluation ayant été enregistrées dans tous les emplacements de mémoire de la partie affectée de la première mémoire et le minimum des valeurs d'évaluation ayant été déterminé, toutes les valeurs d'évaluation sont comparées avec une première valeur-seuil qui est dérivée de la valeur d'évaluation minimale, tous les emplacements de mémoire étant effacés avec une valeur d'évaluation qui dépasse cette première valeur-seuil.

5. Procédé selon l'une des revendications 2 à 4,
caractérisé en ce que
- chaque indication sur une nouvelle partie de la première mémoire dans la première liste comprend une indication sur un nombre d'emplacements de mémoire d'une liste de branches,
- chaque emplacement de mémoire comprend une indication sur un nombre d'emplacements de mémoire d'une liste de recherche,
- chaque emplacement de mémoire de la liste de recherche comprend une indication sur au moins un signal de référence qui est utilisé pour la comparaison avec l'évaluation avec le signal de test suivant ;
- une indication sur le mot précédent et la valeur d'évaluation ;
- chaque emplacement de mémoire de la liste de recherche n'étant adressé que par l'intermédiaire de la première liste et de la liste de branches.

6. Procédé selon la revendication 5,
caractérisé en ce qu'après l'exécution de la comparaison avec l'évaluation pour chacun des signaux de test, tous les emplacements de mémoire de la liste de recherche sont lus et les valeurs d'évaluation correspondantes sont comparées avec la valeur-seuil, seuls les emplacements de mémoire de la liste de recherche dont la valeur d'évaluation correspondante ne dépasse pas la valeur-seuil étant écrasés et que chaque emplacement de mémoire de la liste de branches qui contient seulement des indications sur les emplacements de mémoire effacés de la liste de recherche est effacé.

7. Procédé selon la revendication 6,
caractérisé en ce que, pour chaque emplacement de mémoire de la liste de recherche écrasé avec une indication sur un dernier signal de référence d'une séquence de signaux de référence qui est affectée à un mot, une indication sur ce mot ainsi qu'une indication sur au moins un mot précédent correspondant et la valeur d'évaluation correspondante sont enregistrées dans un nouvel emplacement de mémoire d'une liste de fins de mot, qu'une valeur de modèle de parole est additionnée à chaque valeur d'évaluation en vue d'obtenir une valeur d'évaluation globale, tous les mots identiques se terminant, hormis celui qui présente la valeur d'évaluation globale la plus petite, étant effacés et que tous les emplacements de mémoire non effacés de la liste de fins de mot étant transmis dans de nouveaux emplacements de mémoire d'une deuxième mémoire.

8. Procédé selon l'une des revendications 6 ou 7, caractérisé en ce que, pour chaque emplacement de mémoire écrasé dans la liste de recherche qui contient une indication sur le dernier signal de référence d'une première branche d'arbre, un nouvel emplacement de mémoire de la liste de branches est enregistré et contient une indication sur un nombre de nouveaux emplacements de mémoire de la liste de recherche, chaque emplacement de mémoire de la liste de recherche comprenant des indications sur les signaux de référence d'autres branches d'arbres qui suivent la première branche d'arbre et que, pour chaque mot contenu dans un emplacement de mémoire de la liste de fins de mot qui a été transmis dans la deuxième mémoire, un nouvel emplacement de mémoire de la première liste est formé et contient des indications sur un nombre de nouveaux emplacements de mémoire de la liste de branches et chaque nouvel emplacement de mémoire de la liste de branches contient des indications sur un nombre de nouveaux emplacements de mémoire de la liste de recherche, chaque nouvel emplacement de mémoire de la liste de recherche contenant des indications sur les valeurs de référence de la première branche de l'arbre de vocabulaire.

9. Dispositif de reconnaissance d'une séquence de mots dans un signal de paroles en vue de l'exécution du procédé selon l'une des revendications 1 à 8, avec :
- des moyens de lecture en vue de la lecture du signal de parole à des moments successifs et en vue de la production d'une série de signaux de test ;
- des moyens de mémoire d'arbre en vue de l'enregistrement d'un arbre de vocabulaire avec une racine et un nombre de branches, chaque branche comprenant une séquence d'un ou plusieurs signaux de référence et étant affectée à un élément de parole et chaque mot de vocabulaire étant affecté à un noeud ou extrémité de branche déterminé et représenté par une chaîne de séquences de signaux de référence de la racine jusqu'au noeud ou extrémité correspondants ;
- des moyens d'enregistrement de modèle en vue de l'enregistrement de plusieurs valeurs de modèle de parole dont chacune est affectée de manière univoque à un mot de vocabulaire déterminé et à une séquence de longueur homogène de mots précédents ;
- des moyens de comparaison et d'évaluation qui sont alimentés par les moyens de lecture, par les moyens d'enregistrement d'arbres et par les moyens d'enregistrement de modèles et effectuent une comparaison à la manière d'un signal avec évaluation entre les signaux de test et différentes séquences de signaux de référence et, à la fin d'un mot, dérivent un résultat de mot qui comprend une valeur d'évaluation de mots et une valeur qui est dérivée de la valeur d'évaluation de mots et de la valeur de modèle de parole qui est affectée à ce mot et à la séquence de mots précédents et une indication sur le dernier mot de cette séquence de mots précédents ;
- des moyens de transmission qui sont alimentés par les moyens de comparaison et d'évaluation pour transmettre, par la commande de la réalisation simultanée d'une majorité de mots différents, d'autres résultats à partir des moyens de comparaison et d'évaluation de la racine de l'arbre pour chacun de ces mots non identiques dans une mémoire intermédiaire ;
- des moyens de décision qui sont alimentés par les moyens de comparaison et d'évaluation et par la mémoire intermédiaire pour poursuivre ou ne pas poursuivre au choix la séquence des signaux de référence sur la base de l'acceptabilité ou de la non-acceptabilité des valeurs d'évaluation globales correspondantes;
- des moyens de décision qui sont alimentés par des moyens de comparaison et d'évaluation et par la mémoire intermédiaire pour reconnaître le signal de parole sur la base de la plus petite des valeurs d'évaluation globales présentes simultanément.
